# EUROPEAN PATENT SPECIFICATION

(11) **EP 0 492 290 B1**
(45) Date of publication and mention of the grant of the patent: **08.05.1996**
(21) Application number: 91121282.7
(22) Date of filing: 11.12.1991
(51) Int. Cl.: B60K 7/00

(54) **Driving wheel unit for an electric traction vehicle**
Antriebsrad für Fahrzeuge mit elektrischem Antrieb
Roue motrice pour un véhicule à propulsion électrique

(30) Priority: 21.12.1990 IT 6803890
(43) Date of publication of application: 01.07.1992
(73) Proprietor: FIAT AUTO S.p.A., I-10135 Torino (IT)
(72) Inventor: Gandiglio, Romolo, I-14019 Villanova D'Asti (IT)
(74) Representative: Cerbaro, Elena

(56) References cited:
- EP-A- 0 337 032
- DE-C- 201 263
- FR-A- 2 561 593
- US-A- 2 150 833
- US-A- 2 581 551

## Description

The present invention refers to a driving wheel unit suitable for an electric traction vehicle.

For the propulsion of electric traction vehicles it is known to be advantageous to use, instead of a single motor attached by a mechanical transmission to the driving wheels, several motors mounted directly on the driving wheels. From European patent application number 0345123, for example, one technical solution is known in which all four wheels of a vehicle are each provided with a respective independent propulsion unit. Each unit is suspended from two swinging suspension arms in an articulated quadrilateral arrangement, and has an output shaft; the respective wheel of the vehicle is fitted directly to the output shaft.

*From EP-A-0337032, corresponding to the preambles of Claims 1 and 5, and EP-A-0464929 are known solutions similar as that above, but wherein the motor components are partly integrated in the wheel support unit structure*

*Anyway, t*he solution described in *these* European patent applications *are* still not free from inconveniences: in particular, *they* requires the use of specially produced wheels and there are serious problems in accommodating and supporting the braking devices; finally it results in a relatively complex, heavy structure.

An aim of the invention is to produce a driving wheel unit for propelling an electric traction vehicle which has a simple and light structure, on which the wheels normally on sale for vehicles with endothermic engines currently in circulation can be mounted, and which is compact.

*To this end, a driving wheel in accordance with the present invention is characterized by the features specified in the characterizing parts of Claims 1 and 5*.

For a better understanding of the invention, a non-limitative description is now given of one embodiment thereof, with reference to the appended drawings, in which:
figure 1 illustrates a vehicle suspension fitted with a driving wheel unit produced according to the invention; and
figure 2 illustrates on an enlarged scale the driving wheel unit of figure 1.

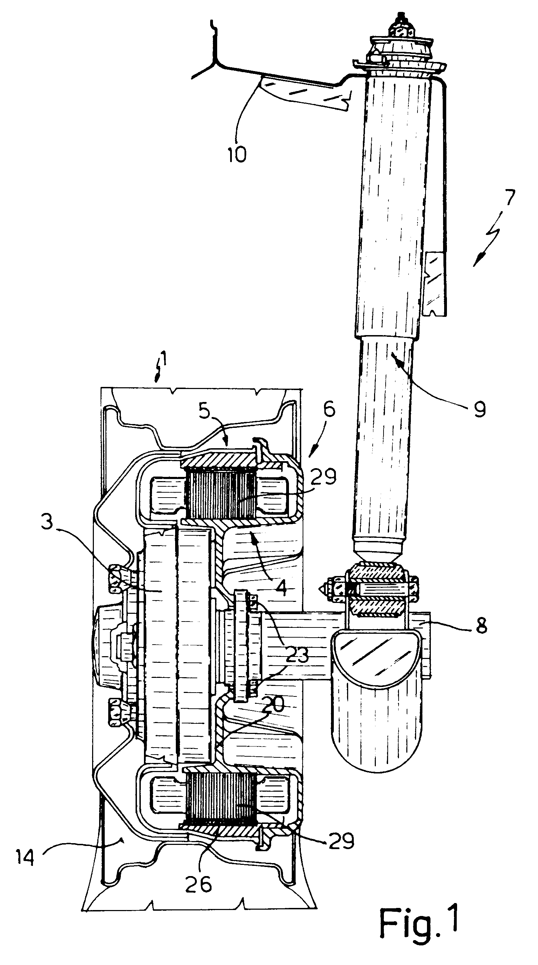

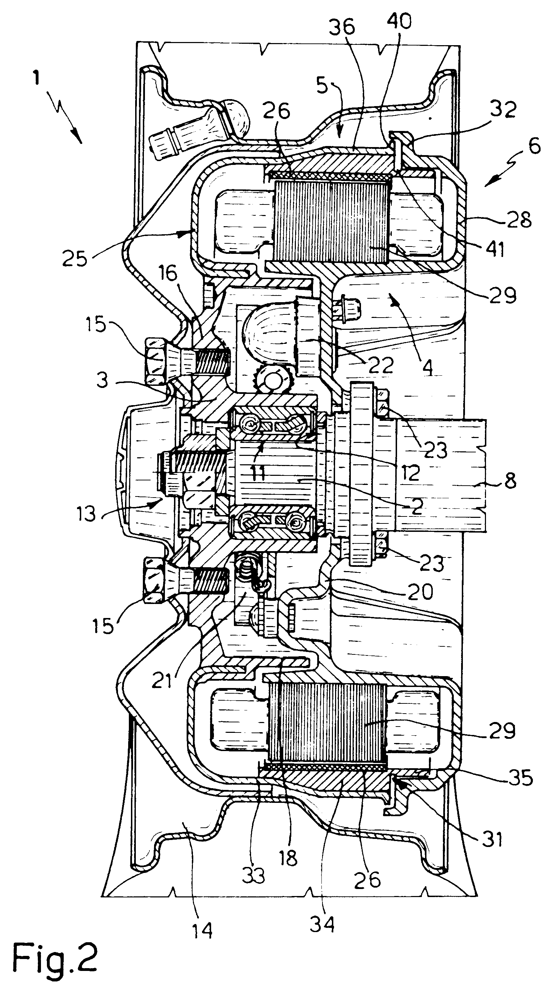

With reference to figures 1 and 2, there is indicated as a whole by 1 a driving wheel unit suitable for an electric traction vehicle otherwise known and not illustrated for simplicity, provided on board with a suitable electric power supply also of a known type and not illustrated for simplicity, for example batteries. The unit 1 comprises a stub axle 2 and a hub 3, both of a known type, on which, according to the invention, are fitted respectively a stator 4 and a rotor 5 of an electric motor 6, of a generally known type. The stub axle 2 is joined in a known manner to a suspension 7 of the vehicle, which in the non-limitative example illustrated is of the rigid axle type, and comprises an axle 8 which has stub axle 2 joined integrally to it, and a shock absorber 9 joined to the body 10 of the vehicle and to the axle 8. It is obvious that, according to a possible variant not illustrated, the wheel unit 1 can also be supported by an independent type wheel suspension, for example the "McPherson" type, by simply joining the stub axle 2 in a known manner directly to the suspension upright, in turn joined to a typical shock absorber 9.

The stub axle 2 supports the hub 3 idle in a known manner, for example by a roller bearing 11 fastened axially against a shoulder 12 of stub axle 2 by a nut 13. The hub 3 in turn supports, in a known manner, a wheel 14 of any known type commonly used on road vehicles. In particular, the wheel 14 is fixed by means of bolts 15 and a flange 16 to the hub 3, which is provided as part, and on the outside periphery, of a known brake drum 18. Integral with stub axle 2 is mounted a brake support bracket 20, which is positioned facing flange 16 of hub 3 and supports in a known manner respective known brake shoes 21 (only one of which is visible in figure 2) capable in use of entering into frictional contact with the drum 18 to brake the rotation of the wheel 14 with respect the stub axle 2, and a known hydraulic control device 22 for the brake shoes 21, attachable in a known manner not illustrated for simplicity to the brake circuit of the vehicle. In the example, the bracket 20 is connected to the axle 8 by means of bolts 23. If the suspension 7 is substituted by an independent type wheel suspension, the bracket 20 is then connected to the suspension upright or is integral thereto.

According to the invention, the unit 1 further comprises a first enclosing element 25 of electric motor 6 fixed angularly and integrally to hub 3 projecting peripherally from it in a radial direction, at least one permanent magnet 26 (in the example several permanent magnets 26 arranged in a ring) supported peripherally by enclosing element 25 which, together with the magnet(s) 26, therefore defines the rotor 5, a second enclosing element 28 positioned coaxially with and facing element 25 and connected integrally with the stub axle 2, and at least one coil 29 of a known type (in the example several coils 29 arranged in a ring) connectable in a known manner not illustrated for simplicity with the said electric power supply and supported integrally by element 28 which, together with the coil(s) 29, thus defines the stator 4.

Elements 25,28 are both cup-shaped, positioned with the concavities facing each other, and each comprises a respective radially external front peripheral edge, indicated respectively by 31 and 32. These edges 31,32 cooperate with each other without touching to define between elements 25,28 which, in use are in relative rotation, a labyrinth seal to protect the motor 6.

In particular element 25 comprises a semi-toroidal element 33 of pressed sheet metal joined integrally to wheel hub 3 on brake drum 18, and an annular element 34 supporting the magnets 26 and positioned inside the semi-toroidal element 33 partially projecting outside it in an axial direction with a portion 35 thereof of smaller diameter joined to a lateral wall 36 radially external to semi-torioidal element 33. One end of the lateral wall 36 is provided radially outwards with a rim 40 which, together with projecting part 35 of element 34, separated from the rest of element 34 by an annular channel 41, delimits the said edge 31 of semi-enclosure 25, which thus has an overall shape conjugate with that of edge 32, which in radial section is substantially Z-shaped and faces rim 40 radially external thereto and to projecting portion 35 of element 34, thus creating a sinuous labyrinth seal between elements 25,28.

Enclosing element 28 is in radial section substantially J-shaped in a position parallel with the wheel axle and, in the example, is obtained as part of brake support bracket 20 on the external periphery thereof. The stator 4 and rotor 5 are dimensioned with maximum external diameters which enable them to be housed entirely inside the wheel 14. Consequently, in use, the unit 1 can be fitted with a standard wheel and perform all the functions of a normal driving wheel unit, including that of braking the wheel 14, in the example by means of a braking device with a known drum already in general use. When current is supplied to the coil(s) 29, a rotating magnetic field is produced which acts on magnets 26 rotating the rotor 5 with respect to the stator 4. Motion is thus also transmitted to the hub 3 driving the wheel 14 without the need for mechanical transmission.

From what has been described, the advantages of the invention are evident. An integrated driving wheel unit of compact dimensions and great simplicity is obtained. It can be produced largely with standard components and is also fitted with braking devices. In particular, the cost of such a unit can be very low, since the electric motor 6 is integrated into the wheel unit simply by attaching to the periphery of otherwise standard parts, such as hub 3 and brake support bracket 20, two semi-enclosures one of which supports the elements of the stator and the other those of the rotor.

## Claims

1. A driving wheel unit (1), suitable for an electric traction vehicle, of the type comprising a stub axle (2) joined to a wheel suspension (7) of the vehicle; a wheel hub (3) mounted idle on the stub axle (2) for receiving a vehicle wheel (14), the wheel (14) being mountable angularly rigid with said hub (3) for rotating therewith; and an electric motor (6) comprising a stator (4) supported in a fixed manner by said stub axle (2) and comprising at least one coil (29) connectable with a source of electric power, and a rotor (5) connected angularly with said hub (3) for rotating therewith; said driving wheel unit (1) further comprising: a first enclosing element (25) for the electric motor, which first element (25) is fixed angularly rigid with said hub (3) for rotation therewith and peripherally projects from the hub (3) in a radial direction, at least one permanent magnet (26) being supported peripherally by said first enclosing element (25) in such a manner as to define thereby said rotor (5);
**characterized** in that said driving wheel unit (1) further comprises a second enclosing element (28) for the electric motor, mounted fixed on the stub axle (2) coaxial with and facing to said first enclosing element (25), said second enclosing element (28) supporting peripherally said at least one coil (29) so as to define thereby said stator (4); said first enclosing element extenting outwards from said hub (3), and said first and second enclosing elements (25,28) being both cup-shaped and positioned with their concavities facing each other; said at least one coil (29) being supported by said second enclosing element (28) inside the concavity thereof.

2. A driving wheel unit (1) according to Claim 1, wherein each of said cup-shaped enclosing elements (25,28) has a respective radially external front peripheral edge (31,32); said edges (31,32) cooperate with each other to define, between said first and second enclosing elements (25,28), a labyrinth seal.

3. A driving wheel unit (1) according to claim 2, characterised in that said first enclosing element (25) comprises a semi-toroidal element (33) of pressed sheet metal joined integrally to said wheel hub (3), on a brake drum (18) thereof, and an annular element (34) supporting said permanent magnet (26) and positioned inside the semi-toroidal element (33), with a portion thereof (35) of smaller diameter partially projecting from it in an axial direction, joined to a lateral wall (36) radially external to the semi-toroidal element (33); one end of said lateral wall (36) of the latter, being provided with a rim 40) and said projecting portion of smaller diameter (35) of said annular element (34) being separated from the rest of the element by a annular channel (41) defining said peripheral front edge (31) of said first enclosing element (25).

4. A driving wheel unit (1) according to claim 3, characterised in that said second enclosing element (28) is, in radial section, substantially J-shaped in a position parallel with the wheel axle, and is obtained as part, and on the external periphery, of a brake support bracket (20) integral with the stub axle (2); said peripheral front edge (32) of the second enclosing element (28) being in radial section substantially Z-shaped and being positioned radially facing the exterior of said rim (40) of the edge of the lateral wall (36) of said semi-toroidal element (33) and said projecting portion of smaller diameter (35) of said annular element (34).

5. A driving wheel unit (1) suitable for an electric traction vehicle, of the type comprising a wheel hub (3) means of braking (18,20,21,22), and an electric motor (6) comprising in turn a stator (4) supporting respective coils (29) of the electric motor (6), and a rotor (5) supporting respective permanent magnets (26) of the electric motor (6);
**characterized** in that the means of braking include a brake drum (18) and means (20,21,22) capable of cooperating with the brake drum (18); and in that said stator (4) directly supports said means (20,21,22) for cooperating with the brake drum (18), which means are mounted rigid with the strator; said hub (3) being comprised of the rotor (5) of the electric motor (6), said rotor (5) being obtained as an integral part of the brake drum (18), which is in turn provided integral in one piece with the vehicle hub (3).

## Patentansprüche

1. Radantriebsbaueinheit (1) geeignet für ein Fahrzeug mit elektrischem Antrieb eines Typs mit einem Achsschenkel (2), der mit einer Radaufhängung (7) des Fahrzeuges verbunden ist, einer Radnabe (3), die freilaufend auf dem Achsschenkel (2) angebracht ist, um ein Fahrzeugrad (14) aufzunehmen, welches Rad (14) unter einem Winkel fest an der Nabe (3) anbringbar ist, so daß es sich damit dreht, und einem elektrischen Motor (6), der einen Stator (4), der fest vom Achsschenkel (2) gehalten ist und wenigstens eine Spule (29) aufweist, die mit einer elektrischen Energiequelle verbindbar ist, und einen Rotor (5) umfaßt, der im Winkel mit der Nabe (3) verbunden ist, so daß er sich damit dreht, welche Radantriebsbaueinheit (1) weiterhin ein erstes Kapselelement (25) für den elektrischen Motor umfaßt, welches erste Element (25) unter einem Winkel starr an der Nabe (3) befestigt ist, so daß es sich damit dreht, und am Umfang von der Nabe (3) in radialer Richtung vorsteht, wobei wenigstens ein Permanentmagnet (26) am Umfang durch das erste Kapselelement (25) so gehalten ist, daß dadurch der Rotor (5) gebildet ist, dadurch gekennzeichnet, daß die Radantriebsbaueinheit (1) weiterhin ein zweites Kapselelement (28) für den elektrischen Motor umfaßt, das fest am Achsschenkel (2) koaxial dazu angebracht ist und dem ersten Kapselelement (25) zugewandt ist, welches zweite Kapselelement (28) am Umfang wenigstens eine Spule (29) hält, so daß dadurch der Stator (4) gebildet ist, wobei das erste Kapselelement von der Nabe (3) nach außen verläuft und das erste und das zweite Kapselelement (25, 28) beide becherförmig und mit ihren Konkavformen einander zugewandt angeordnet sind, und wobei wenigstens eine Spule (29) von dem zweiten Kapselelement (28) im Inneren seiner Konkavform gehalten ist.

2. Radantriebsbaueinheit (1) nach Anspruch 1, bei der jedes becherförmige Kapselelement (25, 28) einen jeweiligen radialen äußeren vorderen Umfangsrand (31, 32) aufweist, welche Ränder (31, 32) miteinander so zusammenarbeiten, daß zwischen dem ersten und dem zweiten Kapselelement (25, 28) eine Labyrinthdichtung gebildet ist.

3. Radantriebsbaueinheit (1) nach Anspruch 2, dadurch gekennzeichnet, daß das erste Kapselelement (25) ein halbtorusförmiges Element (33) aus gepreßtem Metallblech, das in einem Stück mit der Radnabe (3) auf einer Bremstrommel (18) verbunden ist, und ein Ringelement (34) umfaßt, das den Permanentmagneten (26) hält und im Inneren des halbtorusförmigen Elementes (33) angeordnet ist, wobei ein Teil (35) mit kleinerem Durchmesser, der teilweise davon in Axialrichtung vorsteht, mit einer Seitenwand (36) radial außen vom halbtorusförmigen Element (33) verbunden ist, eine Ende der Seitenwand (36) des letzteren mit einem umgebogenen Rand (40) versehen ist und der vorstehende Teil mit kleinerem Durchmesser (35) des Ringelementes (34) vom Rest des Elementes durch einen Ringkanal (41) getrennt ist, der den vorderen Umfangsrand (31) des ersten Kapselelementes (25) bildet.

4. Radantriebsbaueinheit (1) nach Anspruch 3, dadurch gekennzeichnet, daß das zweite Kapselelement (28) im Radialschnitt im wesentlichen J-förmig in einer Position parallel zur Radachse ist und als Teil eines Bremshalteträgers (20) an dessen Außenumfang in einem Stück mit dem Achsschenkel (2) ausgebildet ist, wobei der vordere Umfangsrand (32) des zweiten Kapselelementes (28) im Radialschnitt im wesentlichen Z-förmig und radial dem Äußeren des umgebogenen Randes (40) des Randes der Seitenwand (36) des halbtorusförmigen Elementes (33) und dem vorstehenden Teil mit kleinerem Durchmesser (35) des Ringelementes (34) zugewandt angeordnet ist.

5. Radantriebsbaueinheit (1) geeignet für ein Fahrzeug mit elektrischem Antrieb eines Typs mit einer Radnabe (3), Einrichtungen zum Bremsen (18, 20, 21, 22) und einem elektrischen Motor (6), der seinerseits einen Stator (4), der die jeweiligen Spulen (29) des elektrischen Motors (6) hält, und einen Rotor (5) umfaßt, der jeweilige Permantmagnete (26) des elektrischen Motors (6) hält, dadurch gekennzeichnet, daß die Einrichtungen zum Bremsen eine Bremstrommel (18) und Einrichtung (20, 21, 22) einschließen, die mit der Bremstrommel (18) zusammenarbeiten können, und daß der Stator (4) direkt die Einrichtungen (20, 21, 22) zum Zusammenarbeiten mit der Bremstrommel (18) hält, welche Einrichtungen fest am Stator angebracht sind, wobei die Nabe (3) aus dem Rotor (5) des elektrischen Motors (6) gebildet ist und der Rotor (5) als einstückiger Teil der Bremstrommel (18) vorgesehen ist, die ihrerseits in einem Stück mit der Fahrzeugnabe (3) ausgebildet ist.

## Revendications

1. Roue motrice (1), convenant pour un véhicule à traction électrique, du type comprenant un bout d'arbre (2) relié à une suspension de roue (7) du véhicule; un moyeu de roue (3) monté en rotation libre sur le bout d'arbre (2) pour recevoir une roue de véhicule (14), la roue (14) étant montable rigidement en position angulaire sur ledit moyeu (3) pour tourner avec celui-ci ; et un moteur électrique (6) comprenant un stator (4), supporté d'une manière fixe par ledit bout d'arbre (2) et comportant au moins une bobine (29) connectable à une source d'énergie électrique, et un rotor (5) fixé en position angulaire audit moyeu (3) pour tourner avec celui-ci ; ladite roue motrice (1) comprenant en outre : un premier élément d'entourage (25) pour le moteur électrique, ledit premier élément (25) étant fixé rigidement en position angulaire sur ledit moyeu (3) pour tourner avec celui-ci et faisant périphériquement saillie par rapport au moyeu (3) dans une direction radiale, et au moins un aimant permanent (26) supporté périphériquement par ledit premier élément d'entourage (25) de manière à définir avec lui le dit rotor (5) ;
caractérisée en ce que ladite roue motrice (1) comprend en outre un deuxième élément d'entourage (28) pour le moteur électrique, monté de façon fixe sur le bout d'arbre (2), coaxialement à celui-ci et en regard dudit premier élément d'entourage (25), ledit deuxième élément d'entourrage (28) supportant périphériquement ladite au moins une bobine (29) de façon à définir ainsi ledit stator (4) ; le dit premier élément d'entourage s'étendant vers l'extérieur à partir dudit moyeu (3), et lesdits premier et deuxième éléments d'entourage (25,28) étant tous deux en forme de cuvette et disposés de sorte que leurs concavités soient mutuellement en regard, ladite au moins une bobine (29) étant supportée par ledit deuxième élément d'entourage (28) à l'intérieur de sa concavité.

2. Roue motrice (1) suivant la revendication 1, dans laquelle chacun desdits éléments d'entourage en forme de cuvette (25,28) présente un bord périphérique avant radialement extérieur respectif (31,32), et lesdits bords (31,32) coopèrent l'un avec l'autre pour définir une étanchéité à labyrinthe entre lesdits premier et deuxième éléments d'entourage (25,28).

3. Roue motrice (1) suivant la revendication 2, caractérisée en ce que ledit premier élément d'entourage (25) comprend un élément semi-toroïdal (33) en tôle emboutie fixé solidairement audit moyeu de roue (3), sur son tambour de frein (18), et un élément annulaire (34) supportant ledit aimant permanent (26) et placé à l'intérieur de l'élément semi-toroïdal (33), une partie (35) de plus petit diamètre de l'élément annulaire (34) faisant partiellement saillie par rapport à l'élément semi-toroïdal (33) dans une direction axiale, ladite partie saillante étant reliée à une paroi latérale (36) radialement extérieure de l'élément semi-toroïdal (33) ; une extrémité de ladite paroi latérale (36) de ce dernier comportant un rebord (40) et ladite partie saillante de plus petit diamètre (35) dudit élément annulaire (34) étant séparée du reste de l'élément par une gorge annulaire (41) qui définit ledit bord périphérique avant (31) dudit premier élément d'entourage (25).

4. Roue motrice (1) suivant la revendication 3, caractérisée en ce que ledit deuxième élément d'entourage (28) est sensiblement en forme de J en section radiale, dans une position parallèle à l'essieu de roue, et il est constitué par une partie, sur la périphérie extérieure, d'un support de frein (20) solidaire du bout d'arbre (2) ; ledit bord périphérique avant (32) du deuxième élément d'entourage (28) étant sensiblement en forme de Z en section radiale et étant situé radialement en regard de l'extérieur dudit rebord (40) du bord de la paroi latérale (36) dudit élément semi-toroïdal (33) et de ladite partie saillante de plus petit diamètre (35) dudit élément annulaire (34).

5. Roue motrice (1) convenant pour un véhicule à traction électrique, du type comprenant un moyeu de roue (3), des moyens de freinage (18,20,21,22) et un moteur électrique (6) qui comprend lui-même un stator (4) supportant des bobines respectives (29) du moteur électrique (6), et un rotor (5) supportant des aimants permanents respectifs (26) du moteur électrique (6) ; caractérisée en ce que les moyens de freinage comprennent un tambour de frein (18) et des moyens (20,21,22) pouvant coopérer avec le tambour de frein (18) ; et en ce que ledit stator (4) supporte directement lesdits moyens (20,21,22) pour coopération avec le tambour de frein (18), lesdits moyens étant montés rigidement sur le stator, ledit moyeu (3) étant constitué par le rotor (5) du moteur électrique (6), ledit rotor (5) étant sous la forme d'une partie intégrante du tambour de frein (18) qui est lui-même formé en une seule pièce avec le moyeu de roue (3).
